# EUROPÄISCHE PATENTSCHRIFT

(11) **EP 1 990 559 B1**
(45) Veröffentlichungstag und Bekanntmachung des Hinweises auf die Patenterteilung: **22.08.2012**
(21) Anmeldenummer: 08007904.9
(22) Anmeldetag: 23.04.2008
(51) Int. Cl.: F16H 39/14

(54) **Hydrostatische Maschine und diese verwendender Wandler**
Hydrostatic machine and converters serving same
Machine hydrostatique et convertisseur l'utilisant

(30) Priorität: 08.05.2007 DE 102007022022
(43) Veröffentlichungstag der Anmeldung: 12.11.2008
(73) Patentinhaber: CLAAS Selbstfahrende Erntemaschinen GmbH, 33426 Harsewinkel (DE)
(72) Erfinder: Dückinghaus, Heinrich, 33649 Bielefeld (DE)
(74) Vertreter: Heuer, Wilhelm

(56) Entgegenhaltungen:
- DE-A1- 10 053 947
- DE-A1- 19 642 021
- US-A- 2 570 698
- US-A- 4 289 453
- US-A- 5 419 130
- US-A- 5 545 013

## Beschreibung

Die vorliegende Erfindung betrifft eine hydrostatische Maschine und einen hydrostatischen Wandler, in welchem eine solche Maschine eingesetzt ist. Eine solche hydrostatische Maschine mit einer in einer Kammer drehbar aufgenommenen Axialkolbeneinheit und einer aus der Kammer herausgeführten, mit der Axialkolbeneinheit drehfest verbundenen, ein drehmomentübertragendes Profil tragenden Welle ist zum Beispiel aus DE-PS 1 924 010 bekannt. Das Dokument DE A 19642021 wird als nächster Stand der Technik augesehen und offenbart die Merkmale des Oberbegriffs des Anspruchs 1.

Die Arbeitsweise der Axialkolbeneinheit bringt es mit sich, dass bei einer hydrostatischen Maschine dieser Art im Betrieb beträchtliche Radialkräfte auftreten, die dazu führen, dass das Profil der Welle gegen ein mit ihm zusammenwirkendes komplementäres Profil arbeitet, so dass erheblicher Reibverschleiß auftreten kann, wenn das Profil nicht ausreichend geschmiert ist.

Wenn das Profil selbst in der Kammer angeordnet ist, besteht die Möglichkeit, in dieser einen so hohen Schmierölspiegel einzustellen, dass das Profil darin eintaucht. Diese Maßnahme beeinträchtigt jedoch den Wirkungsgrad der Maschine; je höher der Ölspiegel in der Kammer ist, um so mehr Antriebsenergie geht dadurch verloren, dass bewegliche Teile der Maschine das Ö1 durchrühren.

Eine Aufgabe der vorliegenden Erfindung ist, eine hydrostatische Maschine anzugeben, die gleichzeitig sowohl einen Betrieb mit hohem Wirkungsgrad gestattet als auch eine zuverlässig ausreichende Schmierung des Profils gestattet.

Die Aufgabe wird gelöst durch eine hydrostatische Maschine mit den Merkmalen des Anspruchs 1.

Die parallele Orientierung der Achsen der Axialkolbeneinheiten hat bei Verwendung beider Axialkolbeneinheiten als parallel arbeitende Motoren oder Pumpen den Vorteil, dass, da die Axialkolbeneinheiten stets aus entgegengesetzten Richtungen auf die Schrägscheibe drücken, die von ihnen auf die Schrägscheibe ausgeübten Kräfte sich im Wesentlichen gegenseitig aufheben. Eine Halterung der Schrägscheibe kann daher für eine deutlich kleinere Belastung ausgelegt sein, als der zwischen der Schrägscheibe und einer einzelnen der Axialkolbeneinheiten wirkenden Kraft entspricht.

Einer bevorzugten Ausgestaltung zufolge ist das so geschmierte drehmomentübertragende Profil der Welle mit einem komplementären Profil der Axialkolbeneinheit im Eingriff, um ein Drehmoment zwischen dieser und der Welle zu übertragen; denkbar ist aber auch, ein solches Profil zur Drehmomentübertragung zwischen der Welle und einem außerhalb der Maschine liegenden Apparat einzusetzen.

Um Wirkungsgradeinbußen durch unerwünschtes Bewegen des Schmieröles, das heißt durch sogenannte Planschverluste, zu minimieren, ist der Schmierölspiegel in der Kammer vorzugsweise unterhalb sämtlicher mit der Welle drehbarer Teile gehalten. Das heißt, der Schmierölspiegel liegt so tief, dass die drehbaren Teile nicht in ihn eintauchen.

Um das benötigte Schmieröl dem Profil zuzuführen, hat die Ölversorgungsleitung zweckmäßigerweise einen innerhalb der Welle verlaufenden Abschnitt. Um diesen Abschnitt mit Schmieröl zu speisen, weist ein die Welle tragendes Lager zweckmäßigerweise einen ein Ende der Welle umschließenden Becher auf, und ein sich durch das Lager erstreckender Abschnitt der Ölversorgungsleitung und der innerhalb der Welle verlaufender Abschnitt treffen an dem Becher aufeinander.

Um den Schmierölspiegel in der Kammer auch bei starkem Ölzufluss niedrig halten zu können, kann zweckmäßigerweise eine Saugpumpe an einen Schmierölauslass der Kammer angeschlossen sein.

Eine besonders preiswerte und robuste Lösung ist die Verwendung einer Strahlpumpe als Saugpumpe.

Um die Strahlpumpe zu betreiben, kann ein Hochdruckanschluss der Strahlpumpe parallel zu der Ölversorgungsleitung an eine Quelle für druckbeaufschlagtes Schmieröl angeschlossen sein.

Wenn das Schmieröl gleichzeitig als Hydraulikfluid der Axialkolbeneinheit verwendet ist, kann ein Hochdruckanschluss der Strahlpumpe mit einem Hydraulikfluidanschluss der Axialkolbeneinheit verbunden sein, um aus der gleichen Quelle wie diese mit druckbeaufschlagtem Hydraulikfluid gespeist zu werden.

Gegenstand der Erfindung ist auch ein hydrostatischer Wandler mit einer ersten und einer zweiten hydrostatischen Maschine, von denen wenigstens eine eine Maschine der oben beschriebenen Art ist und von denen die erste als Motor und die zweite als Pumpe arbeitet und mit dem Motor über eine Hochdruck-Fluidleitung und eine Niederdruck-Fluidleitung verbunden ist.

Ein Weg von der Hochdruck-Fluidleitung zur Niederdruck-Fluidleitung verläuft vorzugsweise parallel zu einem durch den Motor verlaufenden Weg durch die Ölversorgungsleitung und einen Filter. So wird jeweils nur ein kleiner Prozentsatz des in den Fluidleitungen zirkulierenden Öles gefiltert, und eine hohe Druckdifferenz, die eine effiziente Filterung in einem Filter von kleinen Abmessungen ermöglicht, kann am Filter aufrechterhalten werden, ohne dass hierfür viel Antriebsleistung verbraucht wird.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch eine erfindungsgemäße hydrostatische Maschine; und
- Fig. 2: eine schematische Darstellung eines hydrostatischen Wandlers, der die Maschine aus Fig. 1 verwendet.

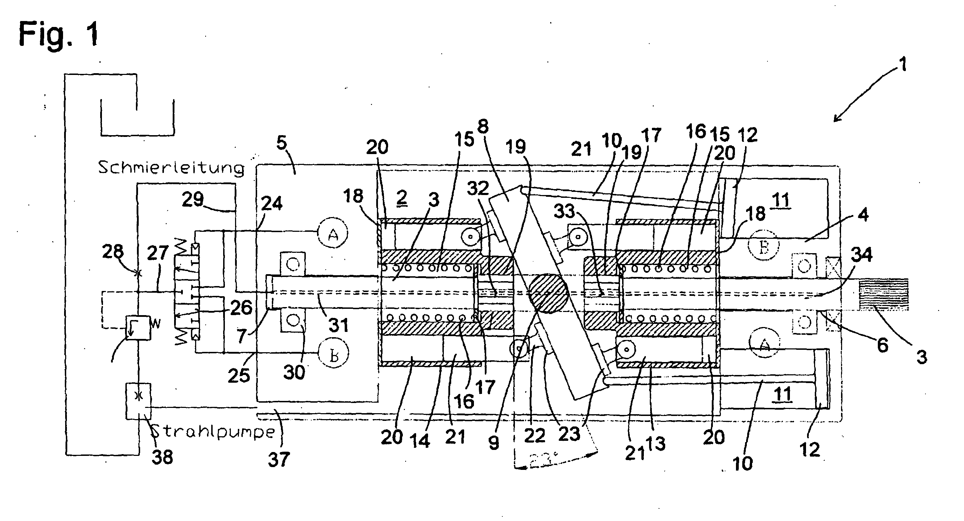

Die in Fig. 1 in einem schematischen Schnitt gezeigte hydrostatische Maschine hat ein (in der folgenden Beschreibung als ortsfest angenommenes) zylindrisches Gehäuse 1 mit einem internen Hohlraum 2. Eine Welle 3 erstreckt sich durch eine Durchgangsbohrung 6 in einer ersten Stirnwand 4 des Gehäuses 1 und den Hohlraum 2 bis in eine Sackbohrung 7 der gegenüberliegenden zweiten Stirnwand 5 des Gehäuses 1.

Eine Schrägscheibe 8 ist zentral in dem Hohlraum 2 um eine zur Schnittebene der Fig. 1 senkrechte Achse 9 schwenkbar angeordnet. Die Schrägscheibe 8 hat einen in der Figur nicht sichtbaren zentralen Durchgang, durch den sich die Welle 3 erstreckt, ohne die Schrägscheibe 8 zu berühren. Die Orientierung der Schrägscheibe 8 ist bestimmt durch zwei an entgegengesetzten Rändern der Schrägscheibe 8 angreifende Stangen 10, die ihrerseits mit in zwei Zylindern 11 der ersten Stirnwand verschiebbaren Kolben 12 verbunden sind. Die Zylinder sind über nicht dargestellte Absperrventile mit einer Quelle bzw. einer Senke für Hydrauliköl verbindbar. Indem das Hydrauliköl über die Ventile in einen der Zylinder 11 zuströmen und aus dem anderen abfließen gelassen wird, ist die Stellung der Schrägscheibe 8 veränderbar; sind die Ventile geschlossen, so ist die Orientierung der Schrägscheibe 8 fest.

Beiderseits der Schrägscheibe 8 sind koaxial zu der Welle 3 Axialkolbeneinheiten 13, 14 in dem Hohlraum 2 aufgenommen. Die Axialkolbeneinheiten haben jeweils eine zentrale Bohrung 15, durch die sich die Welle 3 erstreckt. Die zentrale Bohrung 15 hat einen weiten Abschnitt, dessen Innendurchmesser größer ist als der Außendurchmesser der Welle 3 und in dem eine Schraubenfeder 16 untergebracht ist. Ein Ende der Schraubenfeder 16 drückt gegen einen an einer Schulter der Welle 3 abgestützten Ring 17; das andere Ende hält die Axialkolbeneinheit 13 bzw. 14 gegen eine Anschlussplatte 18 an der Stirnwand 4 bzw. 5 gedrückt.

Ein engerer Abschnitt der zentralen Bohrung 15 hat eine profilierte Innenfläche, die in formschlüssigem Eingriff mit einem Keilwellenprofil 19 der Welle 3 steht und so die Axialkolbeneinheit 13 bzw. 14 drehfest mit der Welle 3 verbindet.

Rings um die zentrale Bohrung 15 sind Zylinder 20 in die Axialkolbeneinheiten 13 bzw. 14 gebohrt, in denen Kolben 21 axial verschiebbar sind. An jeden Kolben 21 ist eine Kolbenstange 22 angelenkt, die an ihrem freien Ende einen auf der Schrägscheibe 8 verschiebbaren Gleitschuh 23 trägt.

In der Anschlussplatte 18 sind zwei kreisbogenförmige Langlöcher gebildet, von denen über (nicht dargestellte) Durchgänge der Stirnwände eines mit einem Hochdruckanschluss 24 und das andere mit einem Niederdruckanschluss 25 des Gehäuses 1 verbunden ist. Diejenigen Zylinder 20, die über das hochdruckseitige Langloch mit Druckfluid versorgt werden, drücken ihre Kolben 21 gegen die Schrägscheibe 8 und versetzen so die Axialkolbeneinheiten 13, 14 und mit ihnen die Welle 3 in Drehung. Wenn durch die Drehung ein Kolben 21 seine obere Totpunktstellung erreicht, verliert er gleichzeitig die Verbindung zu dem hochdruckseitigen Langloch. Bei weitergehender Drehung gelangt er in Verbindung mit dem niederdruckseitigen Langloch, so dass sein Kolben 21 wieder eingedrückt werden und das Druckfluid aus dem Zylinder abfließen kann.

Mit dem Hochdruckanschluss 24 und dem Niederdruckanschluss 25 ist ein hydraulisch gesteuertes Wegeventil 26 verbunden, das in der Fig. 1 in Neutralstellung dargestellt ist. Durch am Hochdruckanschluss 24 anliegenden Druck wird das Wegeventil 26 in eine Stellung versetzt, in der es den Hochdruckanschluss 24 mit einem Auslass 27 verbindet. Von diesem Auslass 27 geht über eine Drossel 28 eine Ölversorgungsleitung ab, von der sich ein Abschnitt 29 durch die zweite Stirnwand des Gehäuses 1 in die Sackbohrung 7 erstreckt. Ein Teil des Öles, das durch den Leitungsabschnitt 29 in die Sackbohrung 7 gelangt, schmiert dort ein Kugellager 30 und bildet einen Ölfilm zwischen der Mantelfläche der Welle 3 und den Wänden der Sackbohrung 7. Der übrige Teil des Öles gelangt in eine sich axial durch die Welle 3 erstreckenden Leitungsabschnitt 31, von dem aus radiale Stichleitungen 32, 33, 34 auf das Keilwellenprofil 19 der Axialkolbeneinheit 14, das Keilwellenprofil 19 der Axialkolbeneinheit 13 bzw. die Durchgangsbohrung 4 münden. So werden über diese Stichleitungen die Keilwellenprofile 19 sowie ein zweites, in der ersten Stirnwand angeordnetes Kugellager 35 geschmiert. Ein Simmerring 36 verhindert den Austritt von Öl aus dem Gehäuse 1. Das über die Stichbohrungen 32-34 frei gesetzte Öl schmiert unter anderem noch die Kontaktflächen zwischen den Axialkolbeneinheiten 13 bzw. 14 und den Anschlussflächen 18, bevor es schließlich in den Hohlraum 2 gelangt und sich an dessen Boden sammelt.

An einen Ölauslass 37 des Gehäuses 1 ist der Sauganschluss einer Strahlpumpe 38 angeschlossen, deren Druckanschluss über ein Druckbegrenzungsventil 39 mit dem Auslass 27 des Wegeventils 26 verbunden ist. Das Druckbegrenzungsventil 39 sorgt dafür, dass bei Inbetriebnahme der hydrostatischen Maschine, wenn sich ein Überdruck am Hochdruckanschluss 24 aufzubauen beginnt, zunächst kein Ö1 über die Strahlpumpe 38 abfließen kann und somit der gesamte Druck am Auslass 27 zur Verfügung steht, um Öl in die Lager der Welle 3 und die Keilwellenprofile 19 zu pressen. Erst wenn dieses Öl beginnt, in den Hohlraum 2 auszutreten, wird die Strahlpumpe 38 benötigt, um sicherzustellen, dass der Ölspiegel im Hohlraum 2 nicht so weit ansteigt, dass die Axialkolbeneinheiten 13, 14 darin eintauchen und so zu Planschverlusten führen.

Das Wegeventil 26 hat einen in Bezug auf die beiden Anschlüsse 24, 25 symmetrischen Aufbau, so dass es, wenn sich das Druckverhältnis an den Anschlüssen umkehrt, wenn also an dem als Niederdruckanschluss 25 bezeichneten Anschluss ein höherer Druck anliegt als an dem Hochdruckanschluss 24, das Wegeventil 26 eine Verbindung zwischen dem Anschluss 25 und dem Auslass 27 herstellt. So ist auch bei einer Umkehrung der Druckverhältnisse an den Anschlüssen 24, 25 - die zu einer Umkehrung der Drehrichtung der Welle 3 führt - für eine ausreichende Schmierung der Lager und der Keilwellenprofile 19 sowie für die Funktionsfähigkeit der Strahlpumpe 38 gesorgt.

In der obigen Beschreibung wurde davon ausgegangen, dass die hydraulische Maschine der Fig. 1 als Motor arbeitet. Dem Fachmann ist jedoch klar, dass dieselbe Maschine auch als Pumpe eingesetzt werden kann.

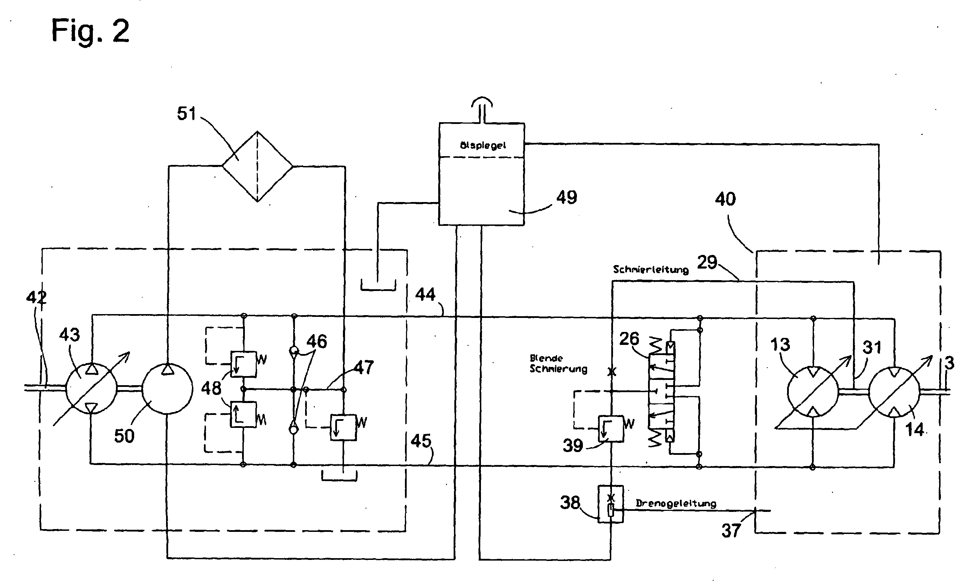

Fig. 2 zeigt schematisch einen hydrostatischen Wandler oder Transformator, in dem die hydraulische Maschine aus Fig. 1 als Motor 40 verwendet ist. Der hydrostatische Wandler umfasst eine über eine Antriebswelle 42 angetriebene Verstellpumpe 43, die an Hydraulikölleitungen 44, 45 angeschlossen ist und je nach Drehsinn der Welle 42 an der Leitung 45 saugt und in die Leitung 44 ausstößt, oder umgekehrt.

Die Leitungen 44, 45 sind über antiparallel zueinander angeordnete Rückschlagventile 46 mit einer neutralen Leitung 47 verbunden, die von den Rückschlagventilen 46 jeweils auf dem niedrigeren der Drücke der Leitungen 44, 45 gehalten ist. Jeweils durch den Druck auf eine der Leitungen 44, 45 angesteuerte Begrenzungsventile 48 sind zwischen die betreffende Leitung 44 oder 45 und die neutrale Leitung 47 geschaltet, um die Druckdifferenz zwischen den Leitungen 44, 45 zu begrenzen.

Ein Vorratstank 49 dient zur Zwischenspeicherung von durch die Strahlpumpe 38 aus dem Gehäuse 1 abgesaugtes Öl. Eine ebenfalls über die Welle 42 angetriebene Konstantpumpe 50 saugt Öl aus dem Vorratstank 49 ab und presst es durch einen Filter 51, dessen Ausgang mit der neutralen Leitung 47 verbunden ist. So gelangt Hydrauliköl, das aus dem von der Verstellpumpe 43 über die Leitungen 44, 45 und den Motor 40 verlaufenden Hauptkreis über das Wegeventil 26 abgezogen wird, in den Hauptkreis zurück.

### Bezugszeichen

- 1.: Gehäuse
- 2.: Hohlraum
- 3.: Welle
- 4.: Stirnwand
- 5.: Stirnwand
- 6.: Bohrung
- 7.: Sackbohrung
- 8.: Schrägscheibe
- 9.: Achse
- 10.: Stange
- 11.: Zylinder
- 12.: Kolben
- 13.: Axialkolbeneinheit
- 14.: Axialkolbeneinheit
- 15.: zentrale Bohrung
- 16.: Schraubenfeder
- 17.: Ring
- 18.: Anschlussplatte
- 19.: Keilwellenprofil
- 20.: Zylinder
- 21.: Kolben
- 22.: Kolbenstange
- 23.: Gleitschuh
- 24.: Hochdruckanschluss
- 25.: Niederdruckanschluss
- 26.: Wegeventil
- 27.: Auslass
- 28.: Drossel
- 29.: Abschnitt der Ölversorgungsleitung
- 30.: Kugellager
- 31.: Leitungsabschnitt
- 32.: Stichleitung
- 33.: Stichleitung
- 34.: Stichleitung
- 35.: Kugellager
- 36.: Simmerring
- 37.: Ölauslass
- 38.: Strahlpumpe
- 39.: Druckbegrenzungsventil
- 40.: Motor
- 41.: -
- 42.: Antriebswelle
- 43.: Verstellpumpe
- 44.: Hydraulikölleitung
- 45.: Hydraulikölleitung
- 46.: Rückschlagventil
- 47.: neutrale Leitung
- 48.: Begrenzungsventil
- 49.: Vorratstank
- 50.: Konstantpumpe
- 51.: Filter

## Patentansprüche

1. Hydrostatische Maschine mit zwei in einer Kammer (2) drehbar aufgenommenen, mit einer gemeinsamen Welle (3) drehfest verbundenen und zu der Welle (3) koaxialen Axialkolbeneinheiten (13, 14), die mit einer gleichen Schrägscheibe (8) wechselwirken und einer aus der Kammer (2) herausgeführten, mit der Axialkolbeneinheit (13, 14) drehfest verbundenen und ein drehmomentübertragendes Profil (19) tragenden Welle (3), **dadurch gekennzeichnet, dass** eine Ölversorgungsleitung (29, 31-34) auf das Profil (19) mündet und dass ein Schmierölspiegel in der Kammer (2) unterhalb des Profils (19) gehalten ist.

2. Hydrostatische Maschine nach Anspruch 1, **dadurch gekennzeichnet, dass** das drehmomentübertragende Profil (19) der Welle (3) mit einem komplementären Profil der Axialkolbeneinheit (13, 14) im Eingriff ist.

3. Hydrostatische Maschine nach Anspruch 1 oder 2, **dadurch gekennzeichnet, dass** der Schmierölspiegel in der Kammer (2) unterhalb sämtlicher mit der Welle (3) drehbarer Teile (13, 14) gehalten ist.

4. Hydrostatische Maschine nach einem der vorhergehenden Ansprüche, **dadurch gekennzeichnet, dass** die Ölversorgungsleitung (29, 31-34) einen innerhalb der Welle (3) verlaufenden Abschnitt (31) umfasst.

5. Hydrostatische Maschine nach Anspruch 4, **dadurch gekennzeichnet, dass** ein die Welle (3) tragendes Lager einen ein Ende der Welle umschließenden Becher (7) aufweist, und dass ein sich durch das Lager erstreckender Abschnitt (29) der Ölversorgungsleitung (29, 31-34) und der innerhalb der Welle (31) verlaufende Abschnitt in den Becher (7) münden.

6. Hydrostatische Maschine nach einem der vorhergehenden Ansprüche, **dadurch gekennzeichnet, dass** eine Saugpumpe (38) an einen Schmierölauslass (37) der Kammer (2) angeschlossen ist.

7. Hydrostatische Maschine nach Anspruch 6, **dadurch gekennzeichnet, dass** die Saugpumpe (38) eine Strahlpumpe ist.

8. Hydrostatische Maschine nach Anspruch 7, **dadurch gekennzeichnet, dass** ein Hochdruckanschluss der Strahlpumpe (38) parallel zu der Ölversorgungsleitung (29, 31-34) an eine Quelle (26) für druckbeaufschlagtes Schmieröl angeschlossen ist.

9. Hydrostatische Maschine nach Anspruch 7 oder 8, **dadurch gekennzeichnet, dass** das Schmieröl als Hydraulikfluid der Axialkolbeneinheit (13, 14) verwendet ist und ein Hochdruckanschluss der Strahlpumpe (38) mit einer die Axialkolbeneinheit (13, 14) mit Hydraulikfluid versorgenden Leitung (44, 45) verbunden ist.

10. Hydrostatischer Wandler mit einer ersten und einer zweiten hydrostatischen Maschine (43, 40), von denen wenigstens eine (40) eine Maschine nach einem der vorhergehenden Ansprüche ist und von denen die erste (40) als Motor und die zweite (43) als Pumpe arbeitet und mit dem Motor (40) über eine Hochdruck-Fluidleitung (44) und eine Niederdruck-Fluidleitung (45) verbunden ist.

11. Hydrostatischer Wandler nach Anspruch 10, **dadurch gekennzeichnet, dass** ein Weg von der Hochdruck-Fluidleitung (44) zur Niederdruck-Fluidleitung (45) parallel zu dem Motor (40) durch die Ölversorgungsleitung (29, 31-34) und einen Filter (51) verläuft.

## Claims

1. Hydrostatic machine having two axial-piston units (13, 14) which are held in a chamber (2) in such a way as to be rotatable, which are connected to a common shaft (3) to be solid in rotation therewith, which are co-axial to the shaft (3) and which interact with one and the same swashplate (8), and having a shaft (3) which extends out of the chamber (2), which is connected to the axial-piston unit (13, 14) to be solid in rotation therewith and which carries torque-transmitting profiling (19), **characterised in that** an oil supply duct (29, 31-34) opens onto the profiling (19) and **in that** a level of lubricating oil in the chamber (2) is kept below the profiling (19).

2. Hydrostatic machine according to claim 1, **characterised in that** the torque-transmitting profiling (19) of the shaft (3) is in engagement with complementary profiling belonging to the axial-piston unit (13, 14).

3. Hydrostatic machine according to claim 1 or 2, **characterised in that** the level of lubricating oil in the chamber (2) is kept below all the parts (13, 14) able to be rotated with the shaft (3).

4. Hydrostatic machine according to one of the preceding claims, **characterised in that** the oil supply duct (29, 31-34) comprises a portion (31) extending within the shaft (3).

5. Hydrostatic machine according to claim 4, **characterised in that** a bearing carrying the shaft (3) has a cup (7) enclosing one end of the shaft, and **in that** a portion (29) of the oil supply duct (29, 31-34) which extends through the bearing and the portion (31) which extends within the shaft open into the cup (7).

6. Hydrostatic machine according to one of the preceding claims, **characterised in that** a suction pump (38) is connected to a lubricating oil outlet (37) from the chamber (2).

7. Hydrostatic machine according to claim 6, **characterised in that** the suction pump (38) is a jet pump.

8. Hydrostatic machine according to claim 7, **characterised in that** a high-pressure connection to the jet pump (38) is connected to a source (26) of pressurised lubricating oil in parallel with the oil supply duct (29, 31-34).

9. Hydrostatic machine according to claim 7 or 8, **characterised in that** the lubricating oil is used as hydraulic fluid for the axial-piston unit (13, 14) and a high-pressure connection of the jet pump (38) is connected to a duct (44, 45) which supplies the axial-piston unit (13, 14) with hydraulic fluid.

10. Hydrostatic converter having a first and a second hydrostatic machine (43, 40) of which at least one (40) is a machine according to one of the preceding claims and of which the first (40) operates as a motor and the second (43) operates as a pump and is connected to the motor (40) by a high-pressure fluid duct (44) and a low-pressure fluid duct (45).

11. Hydrostatic converter according to claim 10, **characterised in that** a path from the high-pressure fluid duct (44) to the low-pressure fluid duct (45) extends parallel to the motor (40) through the oil supply duct (29, 31-34) and a filter (51).

## Revendications

1. Machine hydrostatique ayant deux unités à pistons axiaux (13, 14) qui sont maintenues dans une chambre (2) de façon à pouvoir tourner, qui sont connectées à un arbre commun (3) pour être solidaires en rotation avec ce dernier, qui sont coaxiales par rapport à l'arbre (3) et qui interagissent avec un même plateau oscillant (8), et ayant un arbre (3) qui s'étend hors de la chambre (2), qui est connecté à l'unité à pistons axiaux (13, 14) pour être solidaire en rotation avec cette dernière et qui porte un profilage transmetteur de couple (19), **caractérisée en ce qu'**une conduite d'amenée d'huile (29, 31-34) débouche sur le profilage (19) et **en ce qu'**un niveau d'huile lubrifiante dans la chambre (2) est maintenu au-dessous du profilage (19).

2. Machine hydrostatique selon la revendication 1, **caractérisée en ce que** le profilage transmetteur de couple (19) de l'arbre (3) est en engagement avec un profilage complémentaire appartenant à l'unité à pistons axiaux (13, 14).

3. Machine hydrostatique selon la revendication 1 ou 2, **caractérisée en ce que** le niveau d'huile lubrifiante dans la chambre (2) est maintenu au-dessous de toutes les pièces (13, 14) tournantes avec l'arbre (3).

4. Machine hydrostatique selon l'une des revendications précédentes, **caractérisée en ce que** la conduite d'amenée d'huile (29, 31-34) comprend une partie (31) s'étendant dans l'arbre (3).

5. Machine hydrostatique selon la revendication 4, **caractérisée en ce qu'**un roulement portant l'arbre (3) a une cuvette (7) renfermant une extrémité de l'arbre, et **en ce qu'**une partie (29) de la conduite d'amenée d'huile (29, 31-34) qui s'étend à travers le roulement et la partie (31) qui s'étend dans l'arbre débouchent dans la cuvette (7).

6. Machine hydrostatique selon l'une des revendications précédentes, **caractérisée en ce qu'**une pompe aspirante (38) est connectée à une sortie d'huile lubrifiante (37) de la chambre (2).

7. Machine hydrostatique selon la revendication 6, **caractérisée en ce que** la pompe aspirante (38) est une pompe à jet.

8. Machine hydrostatique selon la revendication 7, **caractérisée en ce qu'**une connexion haute pression à la pompe à jet (38) est connectée à une source (26) d'huile lubrifiante pressurisée en parallèle avec la conduite d'amenée d'huile (29, 31-34).

9. Machine hydrostatique selon la revendication 7 ou 8, **caractérisée en ce que** l'huile lubrifiante est utilisée comme fluide hydraulique pour l'unité à pistons axiaux (13, 14) et une connexion haute pression de la pompe à jet (38) est connectée à une conduite (44, 45) qui amène le fluide hydraulique à l'unité à pistons axiaux (13, 14).

10. Convertisseur hydrostatique ayant une première et une seconde machine hydrostatique (43, 40) dont au moins une (40) est une machine selon l'une des revendications précédentes et dont la première (40) fonctionne comme un moteur et la seconde (43) fonctionne comme une pompe et est connectée au moteur (40) par une conduite de fluide haute pression (44) et une conduite de fluide basse pression (45).

11. Convertisseur hydrostatique selon la revendication 10, **caractérisé en ce qu'**un chemin allant de la conduite de fluide haute pression (44) à la conduite de fluide basse pression (45) s'étend parallèlement au moteur (40) à travers la conduite d'amenée d'huile (29, 31-34) et un filtre (51).
